(19) Europäisches Patentamt
European Patent Office
Office européen des brevets

(11) **EP 2 052 628 B1**

(12) **EUROPEAN PATENT SPECIFICATION**

(45) Date of publication and mention
of the grant of the patent:
**11.12.2013 Bulletin 2013/50**

(51) Int Cl.:
*A23D 7/005* (2006.01)      *A23G 1/52* (2006.01)
*A23L 1/305* (2006.01)

(21) Application number: **08167499.6**

(22) Date of filing: **24.10.2008**

(54) **Aerated fat-continuous products**

Durchlüftete Produkte mit kontinuierlicher Fettphase

Produits aérés à base de graisses

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **25.10.2007 EP 07119262**

(43) Date of publication of application:
**29.04.2009 Bulletin 2009/18**

(73) Proprietors:
• **Unilever PLC
London
EC4Y 0DY (GB)**
Designated Contracting States:
**CY GB IE MT**
• **Unilever N.V.
3013 AL Rotterdam (NL)**
Designated Contracting States:
**AT BE BG CH CZ DE DK EE ES FI FR GR HR HU
IS IT LI LT LU LV MC NL NO PL PT RO SE SI SK TR**

(72) Inventors:
• **Aldred, Deborah Lynne
Bedford, Bedfordshire MK44 1LQ (GB)**

• **Crilly, James Francis
00142 Rome (IT)**
• **Homan, Jennifer Elizabeth
Bedford, Bedfordshire MK44 1LQ (GB)**

(74) Representative: **Hugot, Alain
Unilever Patent Group
Colworth House
Sharnbrook, Bedford, MK44 1LQ (GB)**

(56) References cited:
EP-A- 1 623 631          WO-A-2007/087968
US-A1- 2006 024 417

• **SCHOLMEIJER K ET AL: "FUNGAL
HYDROPHOBINS IN MEDICAL AND TECHNICAL
APPLICATIONS" APPLIED MICROBIOLOGY AND
BIOTECHNOLOGY, SPRINGER VERLAG,
BERLIN, DE, vol. 56, no. 1/02, 1 July 2001
(2001-07-01), pages 1-08, XP001120015 ISSN:
0175-7598**

**Description**

**Technical Field of the Invention**

The present invention relates to fat-continuous products such as chocolate and butter. In particular it relates to aerated fat-continuous food products and methods for producing them.

**Background to the invention**

Fat-continuous products, such as chocolate, butter, margarine, ghee, oils, shortening, peanut butter, chocolate spread and the like are generally unaerated.> However, they may also be aerated for various purposes, for example to increase softness and / or spreadability, to alter texture or to change the visual appearance, e.g. by whitening or opacifying. A well-known example is aerated chocolate, such as Aero™. Unlike water-continuous products, such as mousse or ice cream, it is difficult to aerate a fat-continuous food product to high overruns by simply whipping in the presence of a surfactant because both fat and air are hydrophobic.

Chocolate is usually aerated by a process wherein pressurized gas, for example carbon dioxide, is mixed into the molten chocolate. The pressure is then released and the gas bubbles expand, thereby forming an aerated product. Finally, the aerated chocolate is cooled in order to solidify the fat and thereby retain the aerated structure. This process has been known for many years, for example from GB 459,583 and EP 322,952.

Whipped butter is generally made by whipping air into softened butter at warm temperatures, and then cooling it. US 2,937,093 discloses a process for manufacturing whipped margarine. This process comprises combining liquid margarine with an inert gas (e.g. nitrogen), cooling the mixture, agitating the cooled mixture under pressure to produce a flowable mass, and then releasing the pressure.

EP 285,198 discloses edible plastified products such as margarine or shortening comprising a continuous fat phase and a dispersed gas phase, which exhibit an improved spattering behaviour when used for frying. The product is produced on a votator line and the gas is incorporated in the composition near the beginning of the line, while the composition still comprises essentially no crystallized fat.

US 5,202,147 discloses a method of aerating peanut butter comprising subjecting a molten mass of peanut butter to pressures of from about 200 to about 500 psi, rapidly deep chilling the mass to a temperature of from about 35° to about 50° F, injecting inert gas into the molten mass, and then passing the chilled mass through a narrow orifice.

However, such processes are complex and inconvenient, and moreover often result in relatively low overruns and / or large air bubbles. Thus there remains a need for a simple and improved method for producing aerated fat-continuous products, and in particular a process which results in high overruns and uniformly sized, small gas bubbles.

**Brief Description of the Invention**

In our EP-A 1 623 631 we have previously found that a fungal protein termed hydrophobin allows the production of aqueous foams with excellent stability to disproportionation and coalescence. However, only water-continuous aerated food products are disclosed. Surfactants / aerating agents that are used to generate aerated water-continuous products are usually not surface active in nonpolar solvents, such as fats / oils. We have now found that by using hydrophobin, aerated fat-continuous products can be produced. The resulting overruns are high and the gas bubbles are small and relatively uniform in size.

Accordingly, in a first aspect, the present invention provides an aerated fat-continuous product comprising hydrophobin.

Preferably the product is a food product; more preferably the food product is selected from chocolate, butter, ghee, margarine, low fat spreads, cooking fats and oils, shortening, peanut butter, and chocolate spread.

Preferably the product comprises at least 0.001 wt% hydrophobin.

Preferably the product comprises at most 1 wt% hydrophobin.

Preferably the hydrophobin is in isolated form.

Preferably the hydrophobin is soluble in water.

Preferably the hydrophobin is a class II hydrophobin.

Preferably the product has an overrun of from 5 to 150%, more preferably from 10 to 120%, most preferably 20 to 100%.

Preferably, at least 50% of the gas bubbles have a diameter of less than 0.1 mm.

Moreover, we have found that by using hydrophobin, a particularly simple process can be used to provide aerated fat-continuous products, which results in high overruns and uniformly sized, small gas bubbles. Accordingly, in a second aspect the present invention provides a process for producing an aerated product according to the first aspect of the invention, the process comprising:

a) aerating an aqueous composition comprising hydrophobin to form a foam;

b) mixing the foam into a fat-continuous composition;

c) optionally cooling the mixed composition. In one embodiment the foam is dried, for example by spray drying or freeze drying, before it is mixed into the fat-continuous composition. The drying process is such that the foam is not destroyed during drying. The fat-continuous composition must be sufficiently soft or liquid so that the foam can be mixed in. Cooling then solidifies the fat.

In a third aspect the present invention provides an alternative process for producing an aerated product according to the first aspect of the invention, the process comprising:

a) dispersing a gas into a fat-continuous composition which contains hydrophobin;

b) optionally cooling the resulting composition. The fat-continuous composition must be sufficiently soft, or liquid so that the gas can be mixed in to form a foam. Cooling then solidifies the fat.

In one embodiment, steps a) and b) take place simultaneously while the composition is subjected to shear, for example in a scraped surface heat exchanger or stirred crystallizer. Provided that the fat-continuous composition is sufficiently soft at the point at which the gas is mixed in, most of all of the cooling may take place before step a).

In another embodiment, the gas is dispersed into the fat-continuous composition under pressure and the pressure is then released.

In a variant of the second and third aspects of the invention, the process for producing an aerated product according to the first aspect of the invention comprises:

a) forming an oil-in-water emulsion;

b) cooling the emulsion while applying shear so that phase inversion of the emulsion takes place; and

c) aerating the emulsion during step (a) and / or step (b).

**Detailed Description of the Invention**

Unless defined otherwise, all technical and scientific terms used herein have the same meaning as commonly understood by one of ordinary skill in the art. Definitions and descriptions of various terms and techniques used in fat-continuous food systems are given in Bailey's Industrial Oil and Fat Products, 6th Edition, Shahidi and Fereidoon (eds), Vol 1-6, 2005, John Wiley & Sons. Standard techniques used for molecular and biochemical methods can be found in Sambrook et al., Molecular Cloning: A Laboratory Manual, 3rd ed. (2001) Cold Spring Harbor Laboratory Press, Cold Spring Harbor, N.Y. and Ausubel et al., Short Protocols in Molecular Biology (1999) 4th Ed, John Wiley & Sons, Inc., and the full version entitled Current Protocols in Molecular Biology.

All percentages, unless otherwise stated, refer to the percentage by weight, with the exception of percentages cited in relation to the overrun.

Hydrophobins

Hydrophobins are a well-defined class of proteins (Wessels, 1997, Adv. Microb. Physio. 38: 1-45; Wosten, 2001, Annu Rev. Microbiol. 55: 625-646) capable of self-assembly at a hydrophobic/hydrophilic interface, and having a conserved sequence:

$$X_n\text{-}C\text{-}X_{5\text{-}9}\text{-}C\text{-}C\text{-}X_{11\text{-}39}\text{-}C\text{-}X_{8\text{-}23}\text{-}C\text{-}X_{5\text{-}9}\text{-}C\text{-}C\text{-}X_{6\text{-}18}\text{-}C\text{-}X_m \qquad \text{(SEQ ID No.1)}$$

where X represents any amino acid, and n and m independently represent an integer. Typically, a hydrophobin has a length of up to 125 amino acids. The cysteine residues (C) in the conserved sequence are part of disulphide bridges. In the context of the present invention, the term hydrophobin has a wider meaning to include functionally equivalent proteins still displaying the characteristic of self-assembly at a hydrophobic-hydrophilic interface resulting in a protein film, such as proteins comprising the sequence:

$$X_n\text{-}C\text{-}X_{1\text{-}50}\text{-}C\text{-}X_{0\text{-}5}\text{-}C\text{-}X_{1\text{-}100}\text{-}C\text{-}X_{1\text{-}100}\text{-}C\text{-}X_{1\text{-}50}\text{-}C\text{-}X_{0\text{-}5}\text{-}C\text{-}X_{1\text{-}50}\text{-}C\text{-}X_m \quad \text{(SEQ ID No. 2)}$$

or parts thereof still displaying the characteristic of self-assembly at a hydrophobic-hydrophilic interface resulting in a protein film. In accordance with the definition of the present invention, self-assembly can be detected by adsorbing the protein to Teflon and using Circular Dichroism to establish the presence of a secondary structure (in general, α-helix) (De Vocht et al., 1998, Biophys. J. 74: 2059-68).

The formation of a film can be established by incubating a Teflon sheet in the protein solution followed by at least three washes with water or buffer (Wosten et al., 1994, Embo. J. 13: 5848-54). The protein film can be visualised by any suitable method, such as labeling with a fluorescent marker or by the use of fluorescent antibodies, as is well established in the art. m and n typically have values ranging from 0 to 2000, but more usually m and n in total are less than 100 or 200. The definition of hydrophobin in the context of the present invention includes fusion proteins of a hydrophobin and another polypeptide as well as conjugates of hydrophobin and other molecules such as polysaccharides.

Hydrophobins identified to date are generally classed as either class I or class II. Both types have been identified in fungi as secreted proteins that self-assemble at hydrophobilic interfaces into amphipathic films. Assemblages of class I hydrophobins are generally relatively insoluble whereas those of class II hydrophobins readily dissolve in a variety of solvents. Preferably the hydrophobin is a class II hydrophobin. Preferably the hydrophobin is soluble in water, by which is meant that it is at least 0.1% soluble in water, preferably at least 0.5%. By at least 0.1% soluble is meant that no hydrophobin precipitates when 0.1g of hydrophobin in 99.9 mL of water is subjected to 30,000 g centrifugation for 30 minutes at 20°C.

Hydrophobin-like proteins (e.g."chaplins") have also been identified in filamentous bacteria, such as *Actinomycete* and *Streptomyces* sp. (WO01/74864; Talbot, 2003, Curr. Biol, 13: R696-R698). These bacterial proteins by contrast to fungal hydrophobins, may form only up to one disulphide bridge since they may have only two cysteine residues. Such proteins are an example of functional equivalents to hydrophobins having the consensus sequences shown in SEQ ID Nos. 1 and 2, and are within the scope of the present invention.

The hydrophobins can be obtained by extraction from native sources, such as filamentous fungi, by any suitable process. For example, hydrophobins can be obtained by culturing filamentous fungi that secrete the hydrophobin into the growth medium or by extraction from fungal mycelia with 60% ethanol. It is particularly preferred to isolate hydrophobins from host organisms that naturally secrete hydrophobins. Preferred hosts are hyphomycetes (e.g. Trichoderma), basidiomycetes and ascomycetes. Particularly preferred hosts are food grade organisms, such as *Cryphonectria parasitica* which secretes a hydrophobin termed cryparin (MacCabe and Van Alfen, 1999, App. Environ. Microbiol 65: 5431-5435).

Alternatively, hydrophobins can be obtained by the use of recombinant technology. For example host cells, typically micro-organisms, may be modified to express hydrophobins and the hydrophobins can then be isolated and used in accordance with the present invention. Techniques for introducing nucleic acid constructs encoding hydrophobins into host cells are well known in the art. More than 34 genes coding for hydrophobins have been cloned, from over 16 fungal species (see for example WO96/41882 which gives the sequence of hydrophobins identified in *Agaricus bisporus;* and Wosten, 2001, Annu Rev. Microbiol. 55: 625-646). Recombinant technology can also be used to modify hydrophobin sequences or synthesise novel hydrophobins having desired/improved properties.

Typically, an appropriate host cell or organism is transformed by a nucleic acid construct that encodes the desired hydrophobin. The nucleotide sequence coding for the polypeptide can be inserted into a suitable expression vector encoding the necessary elements for transcription and translation and in such a manner that they will be expressed under appropriate conditions (e.g. in proper orientation and correct reading frame and with appropriate targeting and expression sequences). The methods required to construct these expression vectors are well known to those skilled in the art.

A number of expression systems may be used to express the polypeptide coding sequence. These include, but are not limited to, bacteria, fungi (including yeast), insect cell systems, plant cell culture systems and plants all transformed with the appropriate expression vectors. Preferred hosts are those that are considered food grade - 'generally regarded as safe' (GRAS).

Suitable fungal species, include yeasts such as (but not limited to) those of the genera *Saccharomyces, Kluyveromyces, Pichia, Hansenula, Candida, Schizo saccharomyces* and the like, and filamentous species such as (but not limited to) those of the genera *Aspergillus, Trichoderma, Mucor, Neurospora, Fusarium* and the like.

The sequences encoding the hydrophobins are preferably at least 80% identical at the amino acid level to a hydrophobin identified in nature, more preferably at least 95% or 100% identical. However, persons skilled in the art may make conservative substitutions or other amino acid changes that do not reduce the biological activity of the hydrophobin. For the purpose of the invention these hydrophobins possessing this high level of identity to a hydrophobin that naturally occurs are also embraced within the term "hydrophobins".

Hydrophobins can be purified from culture media or cellular extracts by, for example, the procedure described in WO01/57076 which involves adsorbing the hydrophobin present in a hydrophobin-containing solution to surface and then contacting the surface with a surfactant, such as Tween 20, to elute the hydrophobin from the surface. See also Collen et al., 2002, Biochim Biophys Acta. 1569: 139-50; Calonje et al., 2002, Can. J. Microbiol. 48: 1030-4; Askolin et al., 2001, Appl Microbiol Biotechnol. 57: 124-30; and De Vries et al., 1999, Eur J Biochem. 262: 377-85.

The amount of hydrophobin present in the product will generally vary depending on the formulation and volume of the gas phase. Typically, the product will contain at least 0.001 wt%, hydrophobin, more preferably at least 0.005 or 0.01 wt%. Typically the product will contain less than 1 wt% hydrophobin, more preferably less than 0.5 wt%, for example about 0.1 wt%. The hydrophobin can be from a single source or a plurality of sources e.g. a mixture of two or more different hydrophobins.

The hydrophobin is added in a form and in an amount such that it is available to stabilise the gas phase, i.e. the hydrophobin is deliberately introduced into the product for the purpose of taking advantage of its foam stabilising properties. Consequently, where ingredients are present or added that contain fungal contaminants, which may contain hydrophobin polypeptides, this does not constitute adding hydrophobin within the context of the present invention.

Typically, the hydrophobin is added to the product of the invention in an isolated form, typically at least partially purified, such as at least 10% pure, based on weight of solids. By "isolated form", we mean that the hydrophobin is not added as part of a naturally-occurring organism, such as a mushroom, which naturally expresses hydrophobins. Instead, the hydrophobin will typically either have been extracted from a naturally-occurring source or obtained by recombinant expression in a host organism.

Fat continuous products

Fats are generally triglycerides, i.e. triesters of glycerol and fatty acids. The term "fat" includes oils that are liquid at room temperature, as well as fats that are solid.

The fat continuous product is preferably a food product, such as chocolate, chocolate analogues, chocolate spread, butter, ghee, margarines / spreads, cooking / frying oils, shortenings, peanut butter and the like. Fats typically used in food products include coconut oil, palm oil, palm kernel oil, cocoa butter, milk fat, sunflower oil, safflower oil, olive oil, linseed oil, soybean oil, rapeseed oil, walnut oil, corn oil, grape seed oil, sesame oil, wheat germ oil, cottonseed oil, ground nut oil, fish oil, almond oil, perilla oil, water melon seed oil, rice oil, peanut oil, pistachio oil, hazelnut oil, maize oil and mixtures, fractions or hydrogenates thereof.

The term "chocolate" as used herein includes dark chocolate, white chocolate, and milk chocolate; the term "chocolate analogue" means chocolate-like fat-based confectionery compositions made with fats other than cocoa butter (for example cocoa butter equivalents, coconut oil or other vegetable oils). Chocolate and chocolate analogues may contain cocoa powder, milk solids, sugar or other sweeteners and flavourings.

The terms "margarine" and "spread" refer to the numerous different types of butter substitutes consisting of water-in-oil emulsions made from vegetable and / or animal fats. In addition to the emulsion, margarines / spreads may contain milk protein, salt, emulsifiers, colours, flavourings etc. These terms also cover blends of margarine and butter, and fat-continuous low fat spreads which typically contain less than 40 wt% fat.

Shortening is an edible fat product which typically contains close to 100% fat and is prepared from animal and/or vegetable oils. Shortening is used in frying, cooking, baking, and as an ingredient in fillings, icings, and other confectionery items.

In addition to hydrophobin and fat, the aerated food products of the invention may contain other ingredients conventionally found in food products, such as sugars, salt, proteins, fruit and / or vegetable material, emulsifiers, stabilisers, preservatives, colours, flavours and acids.

Aeration and overrun

The term "aerated" means that gas has been intentionally incorporated into a product, for example by mechanical means. The gas can be any gas, but is preferably, in the context of food products, a food-grade gas such as air, nitrogen, nitrous oxide, or carbon dioxide. The extent of aeration is measured in terms of "overrun", which is defined as:

$$overrun = \frac{\text{weight of unaerated mix - weight of aerated product}}{\text{weight of aerated product}} \times 100$$

where the weights refer to a fixed volume of aerated product and unaerated mix (from which the product is made). Overrun is measured at atmospheric pressure.

Preferably the food product has an overrun of at least 5%, more preferably at least 10%, most preferably at least 20%. Preferably the food product has an overrun of at most 150%, more preferably at most 120%, most preferably at most 100%. In one embodiment, the food product is an aerated butter, margarine or spread, in which case the overrun is preferably from 5 to 50%, more preferably from 10 to 20%, for example about 15%. In another embodiment the food product is a cooking oil which is aerated in order to reduce spattering, in which case the overrun is preferably less than 10%, typically about 5%

In one embodiment the gas bubbles are sufficiently small that they are not visible to the naked eye. This has the advantage that the product is not obviously aerated and has a similar appearance to unaerated products, which may be preferred by consumers. (The aerated products may nonetheless be somewhat lighter in colour or more opaque due to light scattering by the small bubbles). For example, chocolate may be aerated, and therefore have a significantly reduced calorie content per unit volume, whilst being similar in appearance to unaerated chocolate. Preferably, at least 50% of the gas bubbles have a diameter of less than 0.1mm, more preferably less than 0.05mm (determined from the normalised culmulative frequency as described in examples 1 and 2 below).

The present invention will now be further described with reference to the following examples which are illustrative only and non-limiting, and the figures wherein:

Figure 1 shows SEM micrographs of the microstructure of (a) chocolate aerated with a HFBII foam and (b) chocolate aerated with a hygel foam.

Figure 2 shows photographs of the structure of chocolate aerated with carbon dioxide: (a) chocolate; (b) chocolate with water; (c) chocolate with hydrophobin solution

Figure 3 shows the normalized cumulative frequency as a function of bubble diameter for the aerated chocolates shown in Figures 2(b) and (c).

Figure 4 shows photographs of (a) unaerated butter and (b) aerated butter containing hydrophobin.

**Examples**

Example 1: Chocolate aerated by addition of foam

Chocolate having the formulation shown in Table 1 was heated to 45°C.

Table 1

| Ingredient | Amount (wt%) |
|---|---|
| Sugar | 39.5 |
| Cocoa butter | 24.5 |
| Cocoa mass | 21.0 |
| Whole milk powder | 9.5 |
| Butter oil | 5.0 |
| Lecithin | 0.4 |
| Vanillin | 0.05 |

Hydrophobin HFBII was obtained from VTT Biotechnology, Finland. It had been purified from *Trichoderma reesei* essentially as described in WO00/58342 and Linder et al., 2001, Biomacromolecules 2: 511-517. A 20ml aqueous solution of 0.05 wt% HFBII was aerated to a volume of 50ml using an Aerolatte hand-held battery-powered whisk (Aerolatte Ltd, Radlett Hertfordshire, UK). The whisk rotor is a wire coil shaped in a horizontal circle with an outer diameter of 22 mm rotated about a vertical axis through its centre at a rotational speed of approximately 12,000 rpm. The foam was allowed to drain and after 10 minutes the free water was removed by pipette and discarded, in order to minimise the amount of water added to the chocolate (the addition of even small amounts of water is known to affect the textural qualities of chocolate). The foam was then folded into the molten chocolate using a metal palette knife to form 100ml of aerated chocolate.

As a comparison, an aerated chocolate was prepared using a foam stabilised with a conventional food aerating agent, Hygel (Kerry Foods, Ireland) instead of hydrophobin. They hygel sample was produced by the same method, except that the foam was not allowed to drain but used immediately. 12.4ml of a 0.8wt% hygel solution was foamed and mixed into 50ml of molten chocolate.

The overruns were determined by weighing a fixed volume of the unaerated and aerated chocolates. The aerated chocolates were poured into moulds and allowed to harden at -10°C for two hours. The textures and visual appearances of the chocolates were assessed. Both products had soft textures without the normal brittleness associated with chocolate. The hygel sample had a crumbly texture whereas the hydrophbin sample had a truffle-like texture, still crumbly but with a smoother appearance. The hygel sample had a relatively low overrun and some of the air bubbles were visible to the naked eye. The hydrophobin sample had a higher overrun and the bubbles were too small to be visible. The results are summarized in Table 2.

Table 2

| Sample | Overrun | Texture | Appearance |
|---|---|---|---|
| HFBII example | 58.5% | Truffle like | No visible air bubbles |
| Hygel control | 15% | Soft, crumbly | Some visible air bubbles |

The microstructure of each product was visualised using Low Temperature Scanning Electron Microscopy. Each sample was cooled to -80 °C on dry ice, and a section, approximately 5mm x 5mm x 10mm in size, was cut out and mounted on a sample holder using a Tissue Tek: OCT™ compound (PVA 11 %, Carbowax 5% and 85% non-reactive components). The sample including the holder was plunged into liquid nitrogen slush and transferred to a low temperature preparation chamber (Oxford Instruments CT1500HF). The chamber was held under vacuum, approximately $10^{-4}$ bar. The sample was warmed up to -90°C for 60 to 90 seconds, then cooled to -110°C and coated with gold using argon plasma with an applied pressure of $10^{-1}$ millibars and current of 6 milliamps for 45 seconds. The sample was finally transferred to a scanning electron microscope (JSM 5600), fitted with an Oxford Instruments cold stage held at a temperature of -160°C. The sample was examined and representative areas were captured via digital image acquisition software.

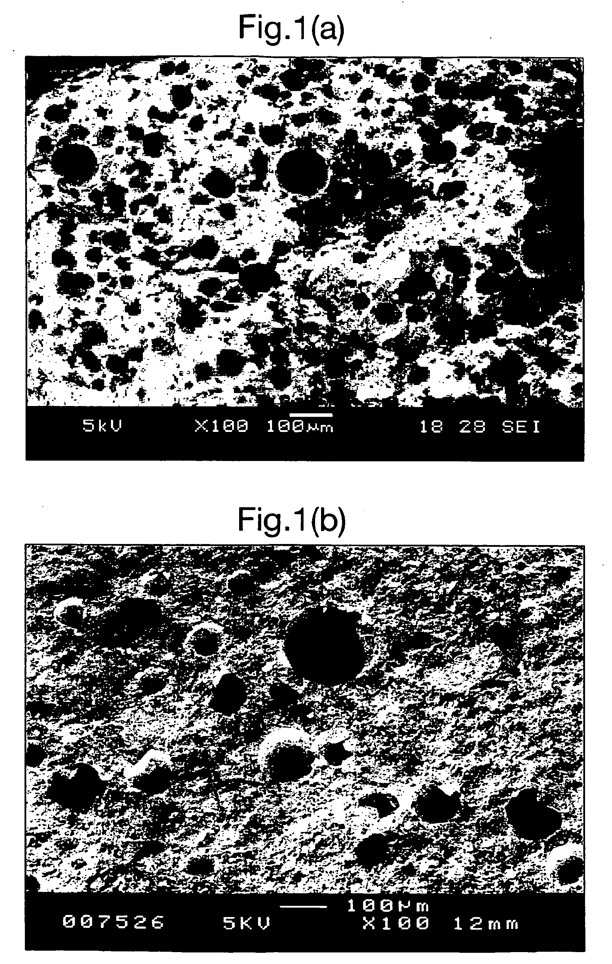

Figure 1 shows the SEM images. The hydrophobin sample contains many small air bubbles (less than $50 \mu m$ in diameter) whereas in the hygel sample, there are fewer, larger air bubbles. Example 1 shows that using hydrophobin results in a higher overrun and smaller bubbles than an equivalent chocolate produced with a conventional food aerating agent. This air structure imparted a soft, truffle-like texture to the chocolate.

Example 2: Chocolate aerated with carbon dioxide

Chocolate (having the formulation given in Table 1 above) at 45°C was poured into 75ml aerosol cans. 1g of 100mg/ml aqueous HFBII solution was added to the chocolate and shaken in. As comparisons, aerosol cans were also prepared containing chocolate with 1g of pure water and chocolate alone. The cans were sealed, shaken, pressurised to 4 bar with carbon dioxide and shaken again. The chocolates in the cans containing the HFB solution and water were observed to be thicker on shaking that the pure chocolate, as expected since the addition of water is known to have a viscosifying effect on chocolate. The cans were stored overnight at 45°C and re-pressurised to 4 bar with carbon dioxide. Their contents were then dispensed through a valve (Precision Valve, Peterborough, UK; 4.8 mm I.D. stem having 2 orifices of 3.2 x 4.6 mm, located in a standard 1-inch cup and having a housing with 4-slots and a tailpiece orifice) into plastic pots. Releasing the pressure by opening the valve causes the gas bubbles expand, forming an aerated chocolate. The filled pots were immediately placed in a blast freezer and stored overnight at -25°C. After storage the chocolate samples were fractured and the gas bubble structure was observed and photographed.

The density of the chocolates was measured as follows. 2 litres of water (4°C) was placed in a beaker on a balance. The balance was then tared. A piece of chocolate (approximately 30g) was placed on the balance next to the beaker and weighed ($m_1$). The piece was then held below the surface of the water using tweezers, taking care not to touch the sides or bottom. The reading of the balance was recorded ($m_2$). By Archimedes' principle, the difference between the readings before and after immersion ($m_1 - m_2$) is equal to density of water multiplied by the volume of water displaced. The volume of the displaced water is the volume of the piece of chocolate. The density of the chocolate is its mass ($m_1$) divided by its volume. The overrun is calculated as before (using the density in the above equation for calculating overrun is equivalent to using a fixed volume). Two repeats were measured and the mean was taken. The results are shown in Table 3.

Table 3

| Sample | Overrun (%) |
|---|---|
| Chocolate | 57.2 |
| Chocolate + water | 62.0 |
| Chocolate + HFBII | 62.7 |

As expected, the gas successfully aerated the chocolate to a high overrun (approximately 60%) in each case.

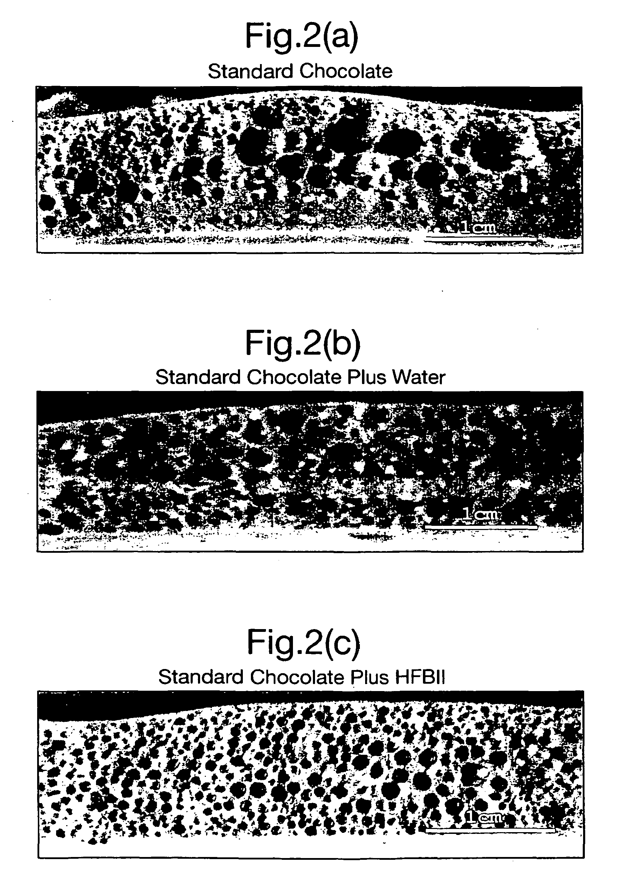

However, although the overruns were similar, HFBII had a substantial effect on the bubble size and distribution, as shown in Figure 2. In the standard chocolate there was a wide distribution of bubble sizes and the bubbles had creamed towards the surface. In the chocolate with water the bubbles were somewhat smaller and there was no creaming, probably due to the increased viscosity of the chocolate. In the chocolate containing HFBII, there was a much more uniform bubble size distribution and some very small bubbles were observed (although these were larger than in the hydrophobin sample of example 1).

The size distributions of the gas bubbles of the aerated chocolate samples containing water and HFB II solution were determined from Figure 2B and 2C respectively using the following method. First, a trained operator (i.e. one familiar with the microstructures of aerated systems) identified the bubbles and traces their outlines on the digital images (i.e. the two dimensional representation of the three dimensional microstructure) using a graphical user interface. The bubble size was calculated from each outline defined by the operator, as follows. The maximum area (A) of the bubble was determined and multiplied by a scaling factor defined by the image magnification. The bubble diameter is defined as the equivalent circular diameter d:

$$d = 2\sqrt{A/\pi}$$

This is the exact definition of the diameter of the two-dimensional cross-section through a perfect sphere. Since most of the gas bubbles were approximately spherical, it is a good measure of the size. The size distribution was obtained by constructing a histogram consisting of bins of width $W$ μm. B(j) is the number of bubbles per unit area in the $j^{th}$ bin (i.e. in the diameter range j x W to (j+1) x W). B(j) is obtained by adding up all the individual contributions of the gas bubbles with a diameter in the range j x W to (j+1) x W. The bubble size distributions are conveniently described in terms of the normalised cumulative frequency, i.e. the total number of bubbles with diameter up to a given size, expressed as a fraction of the total number of bubbles measured. The determination of the size and construction of the distribution can conveniently be performed automatically on a computer, for example by using software such as MATLAB R2006a (MathWorks, Inc) software

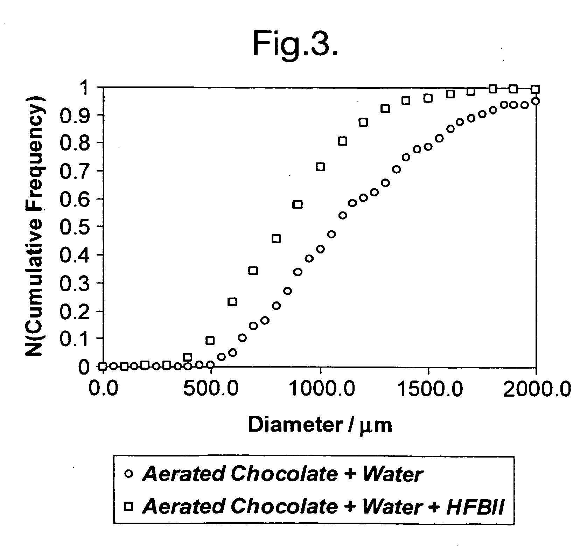

Figure 3 shows the resulting normalised cumulative frequencies. These demonstrate that the bubbles produced when aerating chocolate with hydrophobin are smaller than when no hydrophobin is used.

Example 3: Aerated butter

Butter was produced from double cream (40% fat, Dairy Crest Ingredients, UK) by shearing at 15-20°C. This caused the fat globules in the cream to stick together and coalesce, eventually resulting in a phase inversion to fat-continuous butter. The mixture was then strained through muslin, and the buttermilk removed. A soft, pliable butter was obtained which was sufficiently plastic to allow a foam to be folded in to create the aerated product.

A foam was produced by aerating 12ml of 9.76mg/ml HFBII solution to a volume of 80ml using the Aerolatte device. Half of this foam (40ml) was blended with 72g of butter. An aqueous hygel foam was produced by aerating 12.4ml of a 8mg/ml hygel solution to 60ml with the Aerolatte device. This foam was combined with 76g of butter. The resulting samples were put into pots and hardened for 1 week at 5°C and their overruns were measured as in Example 1. The hardness of the aerated butters was also measured using a Brookfield LFRA Texture Analyser with a 45°, 30mm base diameter cone. The cone was driven into the product at 2mm/sec to a depth of 10mm and the peak load recorded. An unaerated butter sample was also measured for comparison. The results are given in Table 4.

Table 4

| Sample | % Overrun | Peak Hardness at 5°C (g) |
|---|---|---|
| Unaerated butter | 0 | >1000* |
| Butter + Hygel foam | 0 | >1000* |
| Butter + HFBII foam | 30 | 531 |
| * i.e. too hard to be measured on this equipment | | |

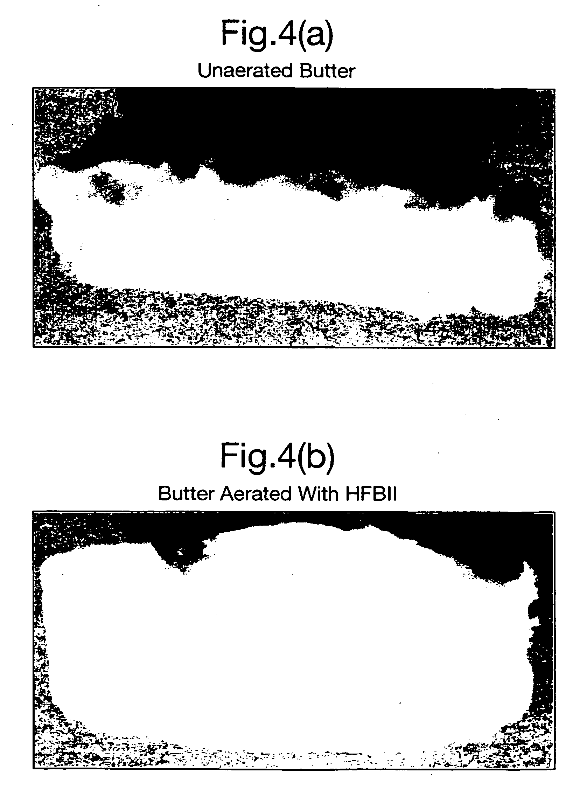

The butter prepared using the hygel foam had zero overrun (i.e. the air was completely lost) and a similar hardness to the unaerated butter. The HFBII foam was stable enough to be mixed into the butter, although some overrun was lost. The resulting product was substantially softer than the unaerated butter. The incorporation of air means that the calorific content of the butter (per unit volume) was reduced by approximately one third. The air bubbles were too small to be visible to the naked eye, however, the aerated butter was whiter than the unaerated butter, indicating the presence of many small air bubbles. Photographs of the unaerated butter and the aerated butter containing hydrophobin are shown in Figure 4.

Example 4: Aerated spreads

Fat-continuous spreads (margarines) were prepared using the formulation given in Table 5.

Table 5

| Ingredient | Amount (wt %) |
|---|---|
| Sunflower oil | 58.50 |
| Hardstock fat blend | 11.14 |
| Lecithin | 0.35 |
| Saturated monoglyceride | 0.03 |
| Water | 28.80 |
| Whey powder | 0.80 |
| Salt | 0.31 |
| Potassium Sorbate | 0.05 |

Emulsions were prepared as follows. The hardstock fat blend (40% hardened palm oil, 60% hardened palm kernel oil), lecithin and saturated monoglyceride were dissolved into the sunflower oil. The whey powder, salt and potassium sorbate were dispersed into hot water and the pH adjusted to 4.7 using citric acid. This aqueous phase was then added into the fat phase and mixed at high speed on a Silverson mixer for 10 minutes to ensure good emulsification. The emulsion was transferred to a jacketed premix tank and agitated. Spreads were prepared from this emulsion using two different processes.

One part of the emulsion was processed through a small scale votator line consisting of the following units: HSC (high speed pin mixer), A (scraped surface heat-exchanger - SSHE), C (pin mixer), A (SSHE). The initial C unit was not cooled, but all subsequent units were cooled to 5°C. All units were run at 1000rpm with a product throughput of 50g/min. The exit temperature of the product was 15.7°C. Samples of unaerated spread were collected. A further set of samples was obtained by manually mixing a foamed solution of HFBII in water into the spread to overruns of 15, 25 and 50%, with a final HFB II concentration of 0.05%. All samples were stored at chill.

A second part of the emulsion was processed through a mini scraped surface heat exchanger (SSHE), which allows air to be incorporated air during the mixing and cooling process. The mini SSHE consisted of a horizontal, jacketed cylindrical barrel (working volume 145 ml) which was cooled with a silicon oil refrigerant. The barrel contained a dasher consisting of two stainless steel scraper blades mounted on a shaft which rotated about the axis of the barrel, so that the blades scraped the cold inner surface of the barrel. The blades were evenly spaced around the circumference of the shaft and were freely hinged. The freezer housed an inlet/outlet valve, a vent valve and a temperature probe. The process conditions were as follows: emulsion flow rate 30ml/min, dasher speed 910rpm, jacket temperature 0°C and exit temperature 6.2°C. A sample containing no air was first collected; then air was introduced at a rate of 20ml/minute and aerated samples were collected (30% overrun). Finally an aqueous solution HFBII was added to the emulsion to give a final concentration of 0.05% in the product, and further aerated samples (33% overrun) were collected. The hardness of the spreads was measured as described in example 3, but using a 6mm cylinder as the probe instead of the cone. The results are given in Table 6.

Table 6

| Sample | % Overrun | Peak Load (g) |
|---|---|---|
| Votator | 0 | 145 |
| Votator + HFB II | 25 | 74 |
| Mini SSHE | 0 | 177 |
| Mini SSHE | 30 | 108 |

(continued)

| Sample | % Overrun | Peak Load (g) |
|---|---|---|
| Mini SSHE + HFB II | 33 | 91 |

Table 6 shows that as expected, the inclusion of air softens the spread. The spreads produced in the mini SSHE were harder than the votator samples because the former had a finer water droplet distribution. Comparison of the aerated mini SSHE samples shows that the sample containing HFB II was softer than that without HFB II. This is partly due to the slightly higher overrun of the HFB II sample, but is also in part due to a difference in the air structure. Confocal microscopy indicated that that the air bubbles in the sample containing HFB II were more homogeneous. The mini SSHE samples were spread onto greaseproof paper and then visually assessed. The sample containing HFB II gave a smoother a surface after spreading than the aerated sample without HFB II.

Example 5: Aerated liquid margarine

Two aqueous solutions were prepared: the first contained 0.25 wt% HFB II and the second contained 0.25 wt% Hygel. Foams were produced by aerating 100ml of each solution to its maximum air phase volume. This was done using first a hand held Bamix blender then refining the bubble distribution using a hand held Aero-latte device. The foams were then allowed to drain so that as little water as possible was transferred to the final product. The HFB II foam was allowed to drain for 30 minutes, but only a few minutes were required for the Hygel solution.
Aerated liquid margarines were then prepared by gently mixing 34ml of each foam into 66ml of Blue Band liquid margarine (Unilever, UK) to create a product having a target overrun of 50%.
On incorporation into the liquid margarine the Hygel foam lost some air phase volume resulting in a reduced final volume (~90ml), and small air bubbles were visible In contrast, the HFB II foam incorporated well into the liquid margarine and did not lose any air. After storage for five days, the HFBII sample still had not lost any volume.

Example 6: Aerated tempered chocolate

Two aqueous foams were prepared using HFB II and Hygel as described in example 5. Milk chocolate (Cadbury's Dairy milk) was placed in a beaker and warmed gently over a larger container of warm (55°C) water. The chocolate was gently stirred to ensure even melting. The final temperature was approximately 30°C (i.e. warm enough to fluidise the chocolate without melting all the fat). 75mls of drained foam was folded gently into 100g portions of the melted chocolate until the mixture was homogenous. Samples were filled into 30ml plastic pots and allowed to cool to room temperature, to maintain the tempered state.
On incorporation into the chocolate, the Hygel foam collapsed and lost much of its air phase volume, resulting in a reduced final overrun of only 3.6%. In contrast, the HFB II foam mixed evenly into the chocolate, and had a final overrun of 16%.
In summary, examples 1 to 6 demonstrate that aerated fat continuous products, such as chocolate, butter and spreads can be successfully produced by using hydrophobin. The resulting products have improved properties (such as smaller and / or more uniform gas bubbles, and / or higher overrun) compared to aerated products wherein hydrophobin is not used.
The various features and embodiments of the present invention, referred to in individual sections above apply, as appropriate, to other sections, mutatis mutandis. Consequently features specified in one section may be combined with features specified in other sections, as appropriate.

**Claims**

1. An aerated fat-continuous product comprising hydrophobin.

2. A product according to claim 1 which is a food product.

3. A product according to claim 2 wherein the food product is selected from chocolate, butter, ghee, margarine, low fat spreads, cooking fats and oils, shortening, peanut butter, and chocolate spread.

4. A product according to any of claims 1 to 3 which comprises at least 0.001 wt% hydrophobin.

**5.** A product according to any of claims 1 to 4 which comprises at most 1 wt% hydrophobin.

**6.** A product according to any of claims 1 to 5 wherein the hydrophobin is in isolated form.

**7.** A product according to any of claims 1 to 6 wherein the hydrophobin is soluble in water

**8.** A product according to any of claims 1 to 7 wherein the hydrophobin is a class II hydrophobin.

**9.** A product according to any of claims 1 to 8 which has an overrun of from 5 to 150%.

**10.** A product according to any of claims 1 to 9 wherein at least 50% of the gas bubbles have a diameter of less than 0.1 mm.

**11.** A process for producing an aerated fat-continuous product comprising hydrophobin, the process comprising:

a) aerating an aqueous composition comprising hydrophobin to form a foam;
b) mixing the foam into a fat-continuous composition;
c) optionally cooling the mixed composition.

**12.** A process according to claim 11 wherein the foam is dried before it is mixed into the fat-continuous composition.

**13.** A process for producing an aerated fat-continuous product comprising hydrophobin, the process comprising:

a) dispersing a gas into a fat-continuous composition which contains hydrophobin;
b) optionally cooling the resulting composition.

**14.** A process according to claim 13 wherein steps a) and b) take place simultaneously while the composition is subjected to shear.

**15.** A process according to claim 14 wherein in step a) the gas is dispersed into the fat-continuous composition under pressure and the pressure is then released.

**Patentansprüche**

**1.** Aufgeschäumtes Produkt mit kontinuierlicher Fettphase, das Hydrophobin umfasst.

**2.** Produkt gemäß Anspruch 1, das ein Lebensmittelprodukt ist.

**3.** Produkt gemäß Anspruch 2, wobei das Lebensmittelprodukt aus Schokolade, Butter, Ghee, Margarine, Aufstrichen mit niedrigem Fettgehalt, Kochfetten und -ölen, Shortening, Erdnussbutter und Schokoladenaufstrich, ausgewählt ist.

**4.** Produkt gemäß einem der Ansprüche 1 bis 3, das wenigstens 0,001 Gew.-% Hydrophobin umfasst.

**5.** Produkt gemäß einem der Ansprüche 1 bis 4, das höchstens 1 Gew.-% Hydrophobin umfasst.

**6.** Produkt gemäß einem der Ansprüche 1 bis 5, wobei das Hydrophobin in isolierter Form ist.

**7.** Produkt gemäß einem der Ansprüche 1 bis 6, wobei das Hydrophobin in Wasser löslich ist.

**8.** Produkt gemäß einem der Ansprüche 1 bis 7, wobei das Hydrophobin ein Klasse-II-Hydrophobin ist.

**9.** Produkt gemäß einem der Ansprüche 1 bis 8, das einen Aufschlag von 5 bis 150 % hat.

**10.** Produkt gemäß einem der Ansprüche 1 bis 9, wobei wenigstens 50 % der Gasblasen einen Durchmesser von weniger als 0,1 mm haben.

**11.** Verfahren zur Herstellung eines aufgeschäumten Produktes mit kontinuierlicher Fettphase, das Hydrophobin umfasst, wobei das Verfahren umfasst:

a) Aufschäumen einer wässrigen Zusammensetzung, die Hydrophobin umfasst, unter Bildung eines Schaums;
b) Einmischen des Schaums in eine Zusammensetzung mit kontinuierlicher Fettphase;
c) gegebenenfalls Kühlen der gemischten Zusammensetzung.

12. Verfahren gemäß Anspruch 11, wobei der Schaum getrocknet wird, bevor er in die Zusammensetzung mit kontinuierlicher Fettphase eingemischt wird.

13. Verfahren zur Herstellung eines aufgeschäumten Produktes mit kontinuierlicher Fettphase, das Hydrophobin umfasst, wobei das Verfahren umfasst:

a) Dispergieren eines Gases in eine Zusammensetzung mit kontinuierlicher Fettphase, die Hydrophobin enthält;
b) gegebenenfalls Kühlen der resultierenden Zusammensetzung.

14. Verfahren gemäß Anspruch 13, wobei Schritte a) und b) gleichzeitig erfolgen, während die Zusammensetzung Scherung unterzogen wird.

15. Verfahren gemäß Anspruch 14, wobei in Schritt a) das Gas in die Zusammensetzung mit kontinuierlicher Fettphase unter Druck dispergiert wird und der Druck dann entspannt wird.


**Revendications**

1. Produit aéré à phase grasse continue, comprenant une hydrophobine.

2. Produit selon la revendication 1, qui est un produit alimentaire.

3. Produit selon la revendication 2, dans lequel le produit alimentaire est sélectionné parmi le chocolat, le beurre, le ghee, la margarine, les produits à tartiner à faible teneur en matières grasses, les matières grasses et huiles de cuisine, une graisse alimentaire, le beurre d'arachide et les pâtes à tartiner au chocolat.

4. Produit selon l'une quelconque des revendications 1 à 3, qui comprend au moins 0,001 % en poids d'hydrophobine.

5. Produit selon l'une quelconque des revendications 1 à 4, qui comprend au plus 1 % en poids d'hydrophobine.

6. Produit selon l'une quelconque des revendications 1 à 5, dans lequel l'hydrophobine est sous une forme isolée.

7. Produit selon l'une quelconque des revendications 1 à 6, dans lequel l'hydrophobine est soluble dans l'eau.

8. Produit selon l'une quelconque des revendications 1 à 7, dans lequel l'hydrophobine est une hydrophobine de classe II.

9. Produit selon l'une quelconque des revendications 1 à 8, qui présente un foisonnement de 5 % à 150 %.

10. Produit selon l'une quelconque des revendications 1 à 9, dans lequel au moins 50 % des bulles de gaz ont un diamètre inférieur à 0,1 mm.

11. Procédé de production d'un produit aéré à phase grasse continue comprenant une hydrophobine, le procédé comprenant :

a) l'aération d'une composition aqueuse contenant une hydrophobine pour former une mousse ;
b) le mélange de la mousse dans une composition à phase grasse continue ;
c) éventuellement le refroidissement de la composition mélangée.

12. Procédé selon la revendication 11, dans lequel la mousse est séchée avant d'être mélangée dans la composition à phase grasse continue.

**13.** Procédé de production d'un produit aéré à phase grasse continue comprenant une hydrophobine, le procédé comprenant :

  a) la dispersion d'un gaz dans une composition à phase grasse continue qui contient une hydrophobine ;
  b) éventuellement le refroidissement de la composition résultante.

**14.** Procédé selon la revendication 13, dans lequel les étapes a) et b) sont réalisées simultanément tandis que la composition est soumise à un cisaillement.

**15.** Procédé selon la revendication 14, dans lequel, dans l'étape a), le gaz est dispersé dans la composition à phase grasse continue sous pression et la pression est ensuite relâchée.

## Fig.1(a)

5kV    X100  100μm         18 29 SEI

## Fig.1(b)

007526    5KV    X100  12mm  100μm

# Fig.2(a)
Standard Chocolate

# Fig.2(b)
Standard Chocolate Plus Water

# Fig.2(c)
Standard Chocolate Plus HFBII

# Fig.3.

Legend:
- o Aerated Chocolate + Water
- □ Aerated Chocolate + Water + HFBII

# Fig.4(a)
Unaerated Butter

# Fig.4(b)
Butter Aerated With HFBII

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 459583 A
- EP 322952 A
- US 2937093 A
- EP 285198 A
- US 5202147 A
- EP 1623631 A
- WO 0174864 A
- WO 9641882 A
- WO 0157076 A
- WO 0058342 A

### Non-patent literature cited in the description

- Bailey's Industrial Oil and Fat Products. John Wiley & Sons, 2005
- **SAMBROOK et al.** Molecular Cloning: A Laboratory Manual. Cold Spring Harbor Laboratory Press, 2001
- **AUSUBEL et al.** Short Protocols in Molecular Biology. John Wiley & Sons, Inc, 1999
- **WESSELS.** *Adv. Microb. Physio.,* 1997, vol. 38, 1-45
- **WOSTEN.** *Annu Rev. Microbiol.,* 2001, vol. 55, 625-646
- **DE VOCHT et al.** *Biophys. J.,* 1998, vol. 74, 2059-68
- **WOSTEN et al.** *Embo. J.,* 1994, vol. 13, 5848-54
- **TALBOT.** *Curr. Biol,* 2003, vol. 13, R696-R698
- **MACCABE ; VAN ALFEN.** *App. Environ. Microbiol,* 1999, vol. 65, 5431-5435
- **COLLEN et al.** *Biochim Biophys Acta,* 2002, vol. 1569, 139-50
- **CALONJE et al.** *Can. J. Microbiol.,* 2002, vol. 48, 1030-4
- **ASKOLIN et al.** *Appl Microbiol Biotechnol.,* 2001, vol. 57, 124-30
- **DE VRIES et al.** *Eur J Biochem.,* 1999, vol. 262, 377-85
- **LINDER et al.** *Biomacromolecules,* 2001, vol. 2, 511-517